# EUROPÄISCHE PATENTSCHRIFT

(11) **EP 2 356 729 B1**
(45) Veröffentlichungstag und Bekanntmachung des Hinweises auf die Patenterteilung: **07.08.2013**
(21) Anmeldenummer: 09764493.4
(22) Anmeldetag: 30.11.2009
(51) Int. Cl.: H02J 1/14, G06F 1/26, G06F 1/30, G06F 1/32

(54) **ANORDNUNG UMFASSEND WENIGSTENS ZWEI STROMVERSORGUNGSEINHEITEN UND WENIGSTENS EINE STROM VERBRAUCHENDE KOMPONENTE, COMPUTERSYSTEM SOWIE VERFAHREN ZUR STEUERUNG EINER ANORDNUNG**
ARRANGEMENT COMPRISING AT LEAST TWO POWER SUPPLY UNITS AND AT LEAST ONE LOAD, COMPUTER SYSTEM AND METHOD TO CONTROL THE ARRANGEMENT
AGANCEMENT COMPRENANT AU MOINS DEUX BLOCS D'ALIMENTATION ÉLECTRIQUE ET AU MOINS UNE CHARGE ÉLECTRIQUE, SYSTÈME INFORMATIQUE ET PROCÉDÉ DE CONTRÔLE DE L'AGANCEMENT

(30) Priorität: 08.12.2008 DE 102008061034
(43) Veröffentlichungstag der Anmeldung: 17.08.2011
(60) Teilanmeldung: 11181018.0
(73) Patentinhaber: Fujitsu Technology Solutions Intellectual Property GmbH, 80807 München (DE)
(72) Erfinder: HEINRICHS, Hans-Jürgen, 33184 Altenbeken (DE); GÖTZ, Manfred, 33034 Brakel (DE)
(74) Vertreter: Epping - Hermann - Fischer
(86) Internationale Anmeldenummer: PCT/EP2009/066068
(87) Internationale Veröffentlichungsnummer: WO 2010/076106

(56) Entgegenhaltungen:
- EP-A2- 1 555 595
- US-A- 5 761 084
- US-A1- 2005 172 157
- US-A1- 2006 161 794
- US-B1- 6 625 736

## Beschreibung

Anordnung umfassend wenigstens zwei Stromversorgungseinheiten und wenigstens eine Strom verbrauchende Komponente, Computersystem sowie Verfahren zur Steuerung einer Anordnung

Die Erfindung betrifft eine Anordnung umfassend wenigstens zwei Stromversorgungseinheiten zum Erzeugen einer ausgangsseitigen Betriebsspannung aus wenigstens einer eingangsseitigen Versorgungsspannung und wenigstens eine Strom verbrauchende Komponente, die elektrisch mit den wenigstens zwei Stromversorgungseinheiten gekoppelt ist. Darüber hinaus betrifft die Erfindung ein Computersystem umfassend eine derartige Anordnung und ein Verfahren zur Steuerung einer Anordnung mit einer Strom verbrauchenden Komponente und wenigstens zwei Stromversorgungseinheiten zum Bereitstellen einer Betriebsspannung für die Strom verbrauchende Komponente.

Anordnungen mit wenigstens zwei Stromversorgungseinheiten zum Erzeugen einer Betriebsspannung für wenigstens eine Strom verbrauchende Komponente sind vielfach bekannt. Insbesondere im Bereich von Hochleistungs- oder Hochverfügbarkeitsservern werden Stromversorgungseinheiten vielfach redundant ausgeführt, so dass auch beim Ausfall einer oder gegebenenfalls mehrerer Stormversorgungseinheiten ein Betrieb des Computersystems weiterhin möglich ist. Darüber hinaus sind weitere Anordnungen mit redundanten Stromversorgungseinheiten beispielsweise aus dem Bereich der Telekommunikation sowie von Steuerungs- und Überwachungssystemen bekannt.

Je nach Leistungsaufnahme der Strom verbrauchenden Komponente kann die Anzahl und Leistungsfähigkeit der redundanten Stromversorgungseinheiten unterschiedlich ausfallen. Insbesondere bei so genannten Hochverfügbarkeitssystemen sind dabei oftmals mehr als eine redundante Stromversorgungseinheit hoher Leistung vorgesehen.

Die bekannten Anordnungen weisen zwei wesentliche Nachteile auf. Zum einen muss jede Stromversorgungseinheit stärker ausgelegt werden, als dies für einen Normalbetrieb notwendig ist. Nur auf diese Weise kann gewährleistet werden, dass auch bei Ausfall einer Stromversorgungseinheit die restlichen Stromversorgungseinheiten nicht jenseits ihrer maximalen Ausgangsleistung belastet werden. Dies führt unter anderem zu erhöhten Kosten der Anordnung, da besonders leistungsfähige Stromversorgungseinheiten teuerer als Stromversorgungseinheiten mittlerer oder geringerer Leistung sind.

Darüber hinaus sind bei den bekannten Anordnungen in der Regel sämtliche Stromversorgungseinheiten aktiv und liefern einen Beitrag zur Versorgung der Strom verbrauchenden Komponente. Infolgedessen wird jede Stromversorgungseinheit im Normalbetrieb weit unterhalb ihrer maximalen Nennausgangsleistung betrieben. Im Falle von Schaltnetzteilen und ähnlichen Wandlerschaltungen zur Erzeugung einer ausgangsseitigen Betriebsspannung aus wenigstens einer eingangsseitigen Versorgungsspannung führt dies jedoch zu einer Verringerung der Energieeffizienz. Zur Erreichung eines möglichst hohen Wirkungsgrades ist es nämlich vorteilhaft, eine Stromversorgungseinheit in der Nähe ihrer maximalen Ausgangsleistung zu betreiben. US 5 761 084 offenbart eine Anordnung, wobei eine Gruppe von Stromversorgungseinheiten die Leistung für den Normalbetrieb versorgt, und eine einzelne Stromversorgungseinheit die Leistung für den eingeschränkten Betrieb versorgt.

Aufgabe der vorliegenden Erfindung ist es, eine Anordnung der oben genannten Art, ein Computersystem mit einer derartigen Anordnung und ein Verfahren zu deren Steuerung zu beschreiben, die die oben genannten Probleme löst oder mindert. Dabei soll die Ausfallsicherheit der Anordnung insgesamt und insbesondere die Stromversorgung der stromversorgenden Komponente auch bei Ausfall wenigstens einer Stromversorgungseinheit sichergestellt werden. Vorteilhafterweise soll die Energiebilanz gegenüber bekannten Anordnungen verbessert werden. Darüber hinaus soll die Anordnung möglichst einfach aufgebaut und kostengünstig herzustellen sein.

Die oben genannte Aufgabe wird durch eine Anordnung umfassend eine Mehrzahl von Stromversorgungseinheiten zum Erzeugen einer ausgangsseitigen Betriebsspannung aus wenigstens einer eingangsseitigen Versorgungsspannung und wenigstens eine Strom verbrauchende Komponente gelöst. Die Strom verbrauchende Komponente ist in wenigstens einer normalen Betriebsart mit einer ersten Leistungsaufnahme und in einer eingeschränkten Betriebsart mit wenigstens einer zweiten, geringeren als der ersten Leistungsaufnahme betreibbar, wobei die Strom verbrauchende Komponente elektrisch mit der Mehrzahl von Stromversorgungseinheiten gekoppelt ist und die erste Leistungsaufnahme der Strom verbrauchende Komponente in der normalen Betriebsart geringer ist als die kombinierte Ausgangsleistung der Mehrzahl von Stromversorgungseinheiten, so dass eine erste Untergruppe von Stromversorgungseinheiten zur Bereitstellung der in der normalen Betriebsart erforderlichen Leistung ausreicht, und eine zweite, kleinere Untergruppe von Stromversorgungseinheiten, insbesondere eine einzelne Stromversorgungseinheit (1A), zur Bereitstellung der in der eingeschränkten Betriebsart erforderlichen Leistung ausreicht. Die Anordnung umfasst weiterhin mit der Mehrzahl von Stromversorgungseinheiten und der Strom verbrauchenden Komponente gekoppelte Steuermittel, die dazu eingerichtet sind, die Funktion der Mehrzahl von Stromversorgungseinheiten zu überwachen und wenigstens eine Stromversorgungseinheit zu deaktivieren, wenn diese Stromversorgungseinheit zur Bereitstellung der in der normalen Betriebsart erforderlichen Leistung nicht benötigt wird, wobei die Steuermittel des Weiteren dazu eingerichtet sind, beim Ausfall wenigstens einer Stromversorgungseinheit der ersten Untergruppe die Strom verbrauchende Komponente aus der normalen Betriebsart in die eingeschränkte Betriebsart zu schalten, wenn die kombinierte Ausgangsleistung der verbleibenden Stromversorgungseinheiten geringer ist als die erste Leistungsaufnahme in der normalen Betriebsart der Strom verbrauchenden Komponente, so dass die Stromaufnahme der Strom verbrauchenden Komponente zumindest vorübergehend reduziert wird.

Eine derartige Anordnung besitzt den Vorteil, dass auch bei der Vorsehung ein Mehrzahl redundanter Netzteile mit einer im Normalfall nicht benötigten Gesamtleistung, ein effizienter Betrieb der einzelnen Netzteile in der Nähe ihrer maximalen Ausgangsleistung gewährleistet werden kann. Eine derartige Anordnung besitzt den Vorteil, dass auch bei der Vorsehung mehrere redundanter Netzteile mit einer im Normalfall nicht benötigten Gesamtleistung, ein effizienter Betrieb der einzelnen Netzteile in der Nähe ihrer maximalen Ausgangsleistung gewährleistet werden kann. Beispielweise können drei Stromversorgungseinheiten vorgesehen werden, die jeweils eine Ausgangsleistung von etwa 50% der benötigten Leistungsaufnahme in der normalen Betriebsart bereitstellen. Im Normalfall werden zwei der drei Stromversorgungseinheiten zur Versorgung der Strom verbrauchenden Komponente in der normalen Betriebsart, bei einer Störung von zwei Netzteilen nur die verbleibende dritte Stromversorgungseinheit zur Versorgung der Strom verbrauchenden Komponente in der eingeschränkten Betriebsart verwendet. Die Verwendung von Steuermitteln, die die Strom verbrauchende Komponente beim Ausfall wenigstens einer Stromversorgungseinheit in eine eingeschränkte Betriebsart mit einer geringeren Leistungsaufnahme schalten, erlaubt den Verzicht auf weitere Stromversorgungseinheiten oder eine entsprechend größere Dimensionierung vorhandener Stromversorgungseinheiten bei gleichzeitiger Sicherstellung der Stromversorgung der Strom verbrauchenden Komponente.

Gemäß einer vorteilhaften Ausgestaltung sind die Steuermittel des Weiteren dazu eingerichtet, beim Ausfall wenigstens einer aktiven Stromversorgungseinheit die wenigstens eine deaktivierte Stromversorgungseinheit zu aktivieren, um die Strom verbrauchende Komponente in der normalen Betriebsart mit der erforderlichen Leistung zu versorgen. Eine derartige Ausgestaltung erlaubt den unterbrechungsfreien Betrieb der Anordnung bei gleichzeitiger Aufrechterhaltung ihrer Energieeffizienz.

Gemäß einer vorteilhaften Ausgestaltung umfassen die Steuermittel wenigstens eine Überwachungsvorrichtung zur Erzeugung eines vorbestimmten Steuersignals bei Ausfall wenigstens einer Stromversorgungseinheit und eine mit der Überwachungsvorrichtung gekoppelte Drosselvorrichtung zur Drosselung der Strom verbrauchenden Komponente beim Empfang des Steuersignals. Durch die Verwendung einer Überwachungsvorrichtung zur Überwachung der Stromversorgungseinheiten einerseits und einer Drosselvorrichtung zur Drosselung der Strom verbrauchenden Komponente andererseits ist ein besonders einfacher, modularer Aufbau der Steuermittel möglich. Insbesondere können bereits vorhandene Überwachungsvorrichtungen der Stromversorgungseinheiten und/oder Drosselvorrichtungen der Strom verbrauchenden Komponente zur Implementierung der erfindungsgemäßen Steuermittel genutzt werden.

Gemäß einer vorteilhaften Ausgestaltung umfasst die Strom verbrauchende Komponente eine Prozessorkern und die Drosselvorrichtung umfasst eine Takterzeugungsschaltung zur Versorgung des Prozessorkerns mit einem Arbeitstakt, wobei der Prozessorkern in der normalen Betriebsart von der Takterzeugungsschaltung mit einem ersten Arbeitstakt und in der eingeschränkten Betriebsart mit einem zweiten, niedrigeren Arbeitstakt versorgt wird. Durch geeignete Ansteuerung oder Beschaltung einer Takterzeugungsschaltung für einen Prozessorkern kann die Leistungsaufnahme der Strom verbrauchenden Komponente auf einfache Weise reduziert werden.

Gemäß einer weiteren vorteilhaften Ausgestaltung sind der Prozessorkern und die Takterzeugungsschaltung in einem Prozessor angeordnet, wobei der Prozessor wenigstens einen Anschlusspin zum Anlegen des vorbestimmten Steuersignals aufweist. Über einen Anschlusspin kann ein externes Steuersignal auf einfache Weise einer internen Takterzeugungsschaltung eines Prozesses zugeleitet werden.

Gemäß einer weiteren vorteilhaften Ausgestaltung umfasst jede der wenigstens zwei Stromversorgungseinheiten eine Überwachungsvorrichtung zur Überwachung einer zulässigen Ausgangsleistung oder eines zulässigen Ausgangsstroms, die dazu eingerichtet ist, beim Erkennen eines Überschreitens der zulässigen Ausgangsleistung beziehungsweise des zulässigen Ausgangsstroms das vorbestimmte Steuersignal zu erzeugen. Eine in die Stromversorgungseinheit integrierte Überwachungsvorrichtung zur Überwachung einer Ausgangsleistung beziehungsweise eines Ausgangsstroms kann auf besonders einfache Weise dazu verwendet werden, das benötigte Steuersignal zu erzeugen.

Gemäß einer weiteren vorteilhaften Ausgestaltung weist die wenigstens eine Überwachungsvorrichtung eine Spannungsüberwachungsschaltung auf, die dazu eingerichtet ist, die ausgangsseitige Betriebsspannung mit einem vorbestimmten Schwellwert zu vergleichen und beim Unterschreiten des vorbestimmten Schwellwerts das vorbestimmte Steuersignal zu erzeugen. Eine derartige Spannungsüberwachungsschaltung erlaubt die einfache und schnelle Feststellung eines mit einem Ausfall einer Stromversorgungseinheit einhergehenden Spannungsabfalls.

Die zugrunde liegende Aufgabe wird ebenso gelöst durch ein Computersystem umfassend wenigstens eine Anordnung gemäß einer der oben genannten Ausgestaltungen und wenigstens einer Verwaltungskomponente, die mit den Steuermitteln gekoppelt und dazu eingerichtet ist, beim Ausfall wenigstens einer Stromversorgungskomponente einen Fehlerzustand zu signalisieren. Durch die Signalisierung eines Fehlerzustandes durch eine mit den Steuermitteln gekoppelte Verwaltungskomponente kann das Computersystem auf den Ausfall der Stromversorgungseinheit reagieren.

Gemäß einer vorteilhaften Ausgestaltung ist die Verwaltungskomponente über eine Kommunikationsvorrichtung mit einem Fernwartungssystem gekoppelt und dazu eingerichtet, den Fehlerzustand an das Fernwartungssystem zu signalisieren. Durch die Signalisierung des Fehlerzustandes an ein Fernwartungssystem kann ein Systemadministrator des Computersystems auf den Ausfall der Stromversorgungseinheit hingewiesen werden.

Gemäß einer weiteren vorteilhaften Ausgestaltung ist die Verwaltungskomponente dazu eingerichtet, bei Signalisierung des Fehlerzustandes eine Konfiguration des Computersystems zu ändern, um eine Leistungsaufnahme des Computersystems zu reduzieren. Durch Umkonfiguration des Computersystems kann dessen Leistungsaufnahme an die geänderte Ausgangsleistung der Stromversorgungseinheiten angepasst werden.

Gemäß einer weiteren vorteilhaften Ausgestaltung ist die Verwaltungskomponente dazu eingerichtet, die Steuermittel nach Änderung der Konfiguration zurückzusetzen, um die Strom verbrauchende Komponente zurück aus der eingeschränkten in die normale Betriebsart zu schalten. Wenn die Konfiguration des Computersystems derart geändert wurde, dass das Computersystem nunmehr auch ohne die ausgefallene Stromversorgungseinheit sicher betrieben werden kann, kann die Strom verbrauchende Komponente zurück in die normale Betriebsart geschaltet werden.

Gemäß einer weiteren vorteilhaften Ausgestaltung ist das Computersystem dadurch gekennzeichnet, dass die wenigstens zwei Stromversorgungseinheiten zusammengenommen eine Ausgangsleistung aufweisen, die im Wesentlichen der ersten Leistungsaufnahme des Computersystems in der normalen Betriebsart entspricht. Durch die Dimensionierung der Stromversorgungseinheiten entsprechend der Leistungsaufnahme des Computersystems in der normalen Betriebsart können die Stromversorgungseinheiten an einem Arbeitspunkt mit optimaler Effizienz betrieben werden. Des Weiteren kann auf den Einsatz teurer, überdimensionierter Stromversorgungseinheiten verzichtet werden. Gemäß einer weiteren vorteilhaften Ausgestaltung ist das Computersystem dadurch gekennzeichnet, dass jede der wenigstens zwei Stromversorgungseinheiten für sich genommen eine Ausgangsleistung aufweist, die im Wesentlichen der zweiten Leistungsaufnahme des Computersystems in der eingeschränkten Betriebsart entspricht. Durch die Dimensionierung der Stromversorgungseinheiten entsprechend der Leistungsaufnahme des Computersystems in der eingeschränkten Betriebsart kann das Computersystem auch bei Ausfall aller bis auf eine Stromversorgungseinheit sicher weiter betreiben werden.

Die zugrunde liegende Aufgabe wird schließlich gelöst durch ein Verfahren zur Steuerung einer Anordnung mit einer Strom verbrauchenden Komponente und einer Mehrzahl von Stromversorgungseinheiten zum Bereitstellen einer Betriebsspannung für die Strom verbrauchende Komponente, wobei eine erste Leistungsaufnahme der Strom verbrauchende Komponente in einer normalen Betriebsart geringer ist als die kombinierte Ausgangsleistung der Mehrzahl von Stromversorgungseinheiten, so dass eine erste Untergruppe von Stromversorgungseinheiten zur Bereitstellung der in der normalen Betriebsart erforderlichen Leistung ausreicht, und eine zweite, kleinere Untergruppe von Stromversorgungseinheiten, insbesondere eine einzelne Stromversorgungseinheit (1A), zur Bereitstellung der in der eingeschränkten Betriebsart erforderlichen Leistung ausreicht, mit den Schritten:
- Deaktivieren wenigstens einer Stromversorgungseinheit, wenn diese Stromversorgungseinheit zur Bereitstellung der in der normalen Betriebsart erforderlichen Leistung nicht benötigt wird,
- Überwachen der Mehrzahl von Stromversorgungseinheiten auf Ausfall durch wenigstens eine Überwachungsvorrichtung,
- Erzeugen eines vorbestimmten Steuersignals durch die wenigstens eine Überwachungsvorrichtung, wenn der Ausfall wenigstens einer aktiven Stromversorgungseinheit erkannt wurde, und
- Schalten der Strom verbrauchenden Komponente von der normalen Betriebsart mit der ersten Leistungsaufnahme in eine eingeschränkte Betriebsart mit einer zweiten, geringeren Leistungsaufnahme, wenn das vorbestimmte Steuersignal erkannt wurde und die kombinierte Ausgangsleistung der verbleibenden Stromversorgungseinheiten geringer ist als die erste Leistungsaufnahme in der normalen Betriebsart der Strom verbrauchenden Komponente, so dass die Stromaufnahme der Strom verbrauchenden Komponente zumindest vorübergehend reduziert wird.

Gemäß einer vorteilhaften Ausgestaltung ist das Verfahren durch einen zusätzlichen Schritt gekennzeichnet, in dem die Strom verbrauchende Komponente zurück aus der eingeschränkten in die normale Betriebsart geschaltet wird, wenn durch die wenigstens eine Überwachungskomponente erkannt wurde, dass die wenigstens eine zuvor ausgefallene Stromversorgungskomponenten wieder funktionsbereit ist. Durch den zusätzlichen Verfahrensschritt kann die Anordnung automatisch zurück in die normale Betriebsart geschaltet werden, wenn eine vorübergehende Störung einer Stromversorgungseinheit beseitigt ist.

Weitere vorteilhafte Ausgestaltungen der Erfindung sind in den Unteransprüchen und der ausführlichen Beschreibung offenbart. Nachfolgend werden unterschiedliche Ausführungsbeispiele der Erfindung anhand von Figuren näher beschrieben.
In den Figuren zeigen:
- Figur 1: eine schematische Darstellung einer Anordnung umfassend zwei Stromversorgungseinheiten und eine Strom verbrauchende Komponente gemäß einer ersten Ausgestaltung der Erfindung,
- Figur 2: ein Ablaufdiagramm eines Verfahrens zur Steuerung einer Anordnung gemäß einer zweiten Ausführungsform der Erfindung,
- Figur 3: ein Computersystem mit einer Anordnung gemäß einer dritten Ausführungsform der Erfindung und
- Figur 4: verschiedene Betriebssituationen eines Anordnung gemäß einer vierten Ausführungsform der Erfindung.

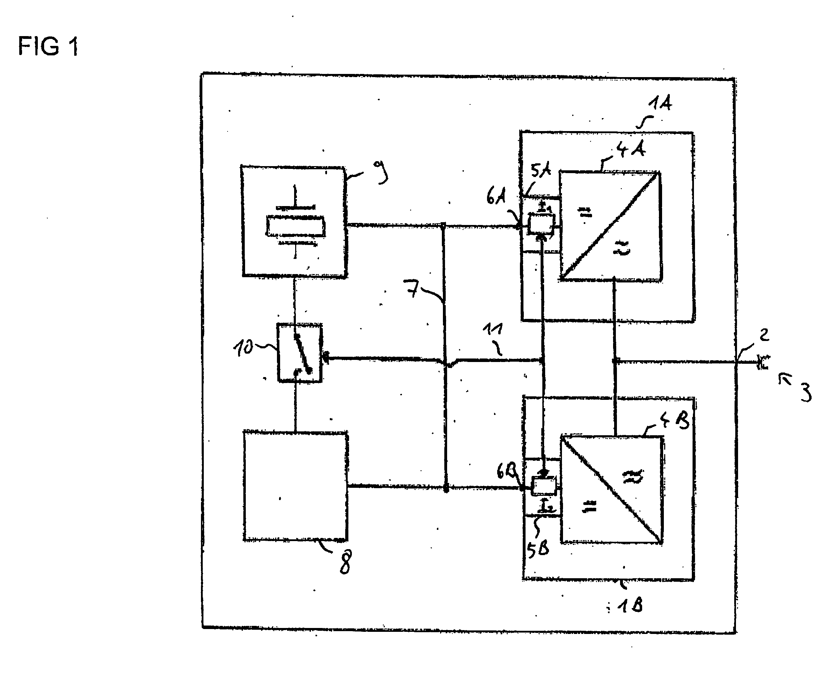

Figur 1 zeigt eine Anordnung umfassend zwei Stromversorgungseinheiten 1A und 1B. Im Ausführungsbeispiel beträgt die maximale Ausgangsleistung der Stromversorgungseinheit 1A sowie der Stromversorgungseinheit 1B jeweils 100 Watt. Beide Stromversorgungseinheiten 1A und 1B sind über einen gemeinsamen Spannungseingang 2 mit einer Versorgungsspannung 3, beispielsweise einer Netzwechselspannung von 235 Volt, verbunden.

Jede der Stromversorgungseinheiten 1A und 1B weist eine Wandlerschaltung 4A beziehungsweise 4B zum Erzeugen einer ausgangsseitigen Gleichspannung aus der eingangsseitigen Versorgungsspannung 3 auf. Beispielsweise kann es sich bei den Wandlerschaltungen 4A und 4B um Schaltwandler handeln, die eine oder mehrere stabilisierte Ausgangsspannungen von beispielsweise 3,3 Volt, 5 Volt und 12 Volt zum Betrieb eines Computersystems liefern. Zur Vermeidung von Schäden an der Wandlerschaltung 4A und 4B weist jede der Stromversorgungseinheiten 1A beziehungsweise 1B eine Überwachungsschaltung 5A beziehungsweise 5B auf, die im Ausführungsbeispiel den Ausgangsstrom der Wandlerschaltung 4A beziehungsweise 4B überwacht.

Jeweils ein Spannungsausgang 6A und 6B der ersten Stromversorgungseinheit 1A beziehungsweise 1B ist mit einer Stromversorgungsleitung 7 der Anordnung gekoppelt. Über die Stromversorgungsleitung 7 wird die Ausgangsspannung der ersten und der zweiten Stromversorgungseinheit 1A beziehungsweise 1B einer Strom verbrauchenden Komponente 8, beispielsweise einem Prozessor eines Computersystems, sowie einer Takterzeugungsschaltung 9 zugeführt. Zusammengenommen weisen die Strom verbrauchende Komponente 8 und die Takterzeugungsschaltung 9 eine Eingangsleistung auf, die im Wesentlichen der Ausgangsleistung der beiden Stromversorgungseinheiten 1A und 1B entspricht.

Die Takterzeugungsschaltung 9 ist über einen Unterbrecher 10 mit der Strom verbrauchenden Komponente 8 gekoppelt. Der Unterbrecher 10 ist des Weiteren über eine Steuerleitung 11 mit den Überwachungsschaltungen 5A und 5B der ersten Stromversorgungseinheit 1A beziehungsweise der zweiten Stromversorgungseinheit 1B gekoppelt. Durch Bereitstellung eines geeigneten Steuersignals über die Steuerleitung 11 kann somit die Zuführung eines Taktsignals von der Takterzeugungsschaltung 9 an die Strom verbrauchende Komponente 8 zeitweise unterbunden beziehungsweise die Frequenz des Taktsignals reduziert werden, was zu einer raschen und erheblichen Verminderung der Leistungsaufnahme der Strom verbrauchenden Komponente 8 führt. Beispielsweise kann die Leistungsaufnahme der Strom verbrauchenden Komponente 8 im Bereich von wenigen Millisekunden auf die Hälfte reduziert werden.

Fällt im in der Figur 1 dargestellten Ausführungsbeispiel eine der Stromversorgungseinheiten 1A oder 1B aus, steigt der Ausgangsstrom an der im Betrieb verbleibenden Stromversorgungseinheit 1B beziehungsweise 1A schlagartig an. Fällt beispielsweise die erste Wandlerschaltung 4A vollständig aus, muss der gesamte Strom zum Betrieb der Strom verbrauchenden Komponente 8 und der Takterzeugungsschaltung 9 durch die Wandlerschaltung 4B der zweiten Stromversorgungseinheit 1B bereitgestellt werden. Infolgedessen überschreitet der Ausgangsstrom der Wandlerschaltung 4B einen vorbestimmten Grenzwert, so dass die Überwachungsschaltung 5B anspricht und über die Steuerleitung 11 ein Steuersignal an den Unterbrecher 10 übermittelt. Eine beispielsweise in dem Unterbrecher 10 angeordnete, in der Figur 1 jedoch nicht dargestellte Steuerschaltung sorgt dafür, dass beim Empfang des Steuersignals die Takterzeugungsschaltung 9 die Stromaufnahme der Strom verbrauchenden Komponente 8 innerhalb kürzester Zeit zumindest vorübergehend reduziert wird. Hierfür eignet sich insbesondere die Unterbrechung oder Reduzierung des Taktsignals. Auf diese Weise wird eine Überlastung der verbleibenden Stromversorgungseinheit 1B vermieden. Gleichzeitig kann zumindest der momentane Zustand der Strom verbrauchenden Komponente 8 bis auf weiteres gesichert werden.

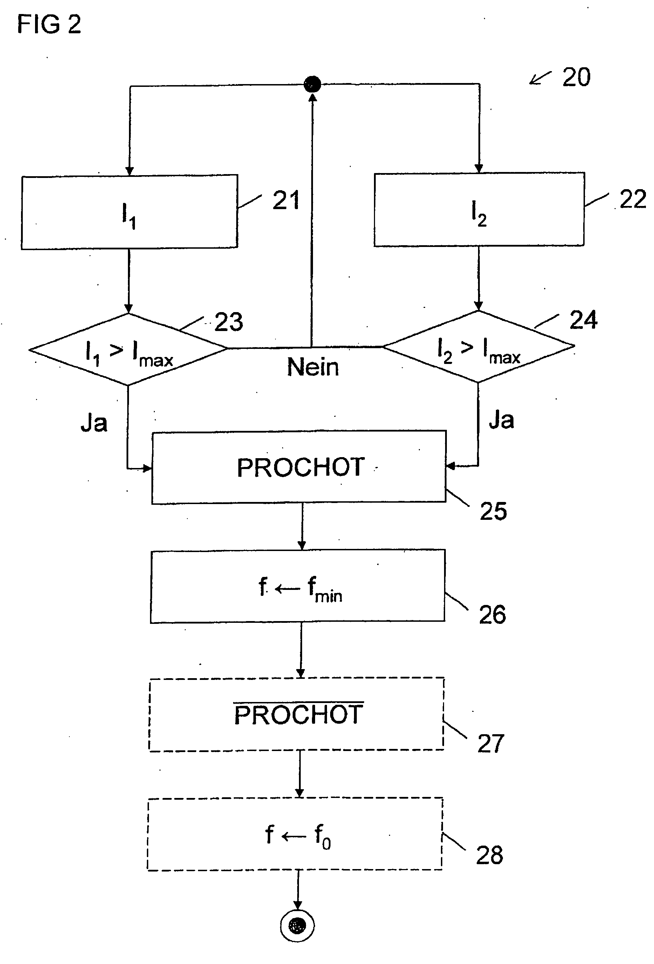

Bevor weitere Maßnahmen zum Betrieb der Anordnung in einer eingeschränkten Betriebsart sowie Maßnahmen zur Wiederherstellung der normalen Betriebsart beschrieben werden, wird zunächst das grundsätzliche Steuerungsverfahren anhand des Ablaufdiagramms der Figur 2 erläutert.

In Schritten 21 und 22 wird eine Ausgangsgröße einer ersten beziehungsweise einer zweiten Stromversorgungseinheit 1A beziehungsweise 1B erfasst. Dabei kann es sich beispielsweise um den momentanen Ausgangsstrom oder eine momentane Ausgangsleistung der jeweiligen Stromversorgungseinheit 1A oder 1B handeln. Alternativ kann auch die Höhe einer momentanen Betriebsspannung oder ein sonstiger Parameter überwacht werden. In nachfolgenden Schritten 23 und 24 wird überprüft, ob der erfasste Parameter über einem jeweiligen Grenzwert liegt. Basierend auf der beispielhaften Ausgestaltung gemäß Figur 1 wird überprüft, ob der erste oder der zweite Ausgangsstrom I₁ beziehungsweise I₂ der ersten beziehungsweise der zweiten Stromversorgungseinheit 1A beziehungsweise 1B über einen maximal zulässigen Grenzwert Iₘₐₓ liegt. Ist dies nicht der Fall, wird das Verfahren erneut mit den Schritten 21 und 22 fortgesetzt.

Liegt einer der erfassten Parameter über einem zulässigen Grenzwert, wird in einem Schritt 25 ein geeignetes Steuersignal erzeugt. Beispielsweise kann ein vorbestimmtes Spannungspotential an einen externen Anschlusspin eines Prozessors übermittelt werden, beispielsweise den so genannten PROCHOT-Pin, der üblicherweise zur Signalisierung einer thermischen Überlastsituation dient.

Als Reaktion auf das Steuersignal reduziert eine Strom verbrauchende Komponente 8, beispielsweise ein Prozessor, seine Stromaufnahme. Beispielsweise kann eine interne Takterzeugungs- oder Vervielfältigungsschaltung so konfiguriert werden, dass ein Prozessorkern nur mit einem minimalen Arbeitstakt mit einer Frequenz fₘᵢₙ versorgt wird. Beispielsweise kann der minimale Arbeitstakt nur 12,5% einer Grundfrequenz f₀ des normalen Arbeitstakts betragen. Auf diese Weise kann eine Strom verbrauchende Komponente 8 auch beim Ausfall einer Stromversorgungseinrichtung 1 weiter in einer eingeschränkten Betriebsart betrieben werden, ohne dass es einer redundanten Stromversorgungseinrichtung 1 bedarf.

Stehen wieder sämtliche Stromversorgungseinheiten 1A und 1B zur Verfügung oder wurde die Leistungsaufnahme der überwachten Anordnung anderweitig reduziert, kann in einem optionalen Schritt 27 durch ein geeignetes Steuersignal die Strom verbrauchende Komponente 8 zurück in die normale Betriebsart geschaltet werden. Beispielsweise kann das Steuersignal am Anschlusspin PROCHOT zurückgenommen werden, so dass die Drosselung eines Prozessorkerns aufgehoben wird.

In einem Schritt 28 wird daraufhin der Arbeitstakt der Strom verbrauchenden Komponente wiederum auf die normale Frequenz f₀ erhöht, die größer als die reduzierte Frequenz fₘᵢₙ ist.

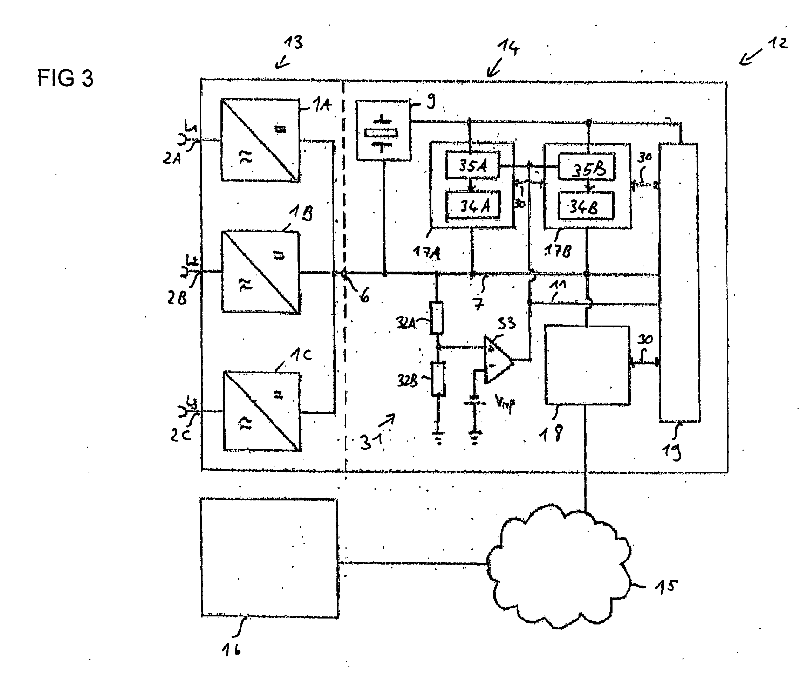

Figur 3 zeigt ein Computersystem 12 umfassend eine Versorgungskomponente 13 und eine Rechnereinheit 14. Das Computersystem 12 ist über ein Datennetzwerk 15 mit einem Fernwartungssystem 16 verbunden.

Die Versorgungskomponente 13 des Computersystems 12 umfasst drei Stromversorgungseinheiten 1A bis 1C, die mittels zugehöriger Spannungseingänge 2A bis 2C an unterschiedliche Phasen eines mehrphasigen Stromversorgungsnetzes angeschlossen sind. Jede der Stromversorgungseinheiten 1A bis 1C umfasst eine in der Figur 3 nicht dargestellte Wandlerschaltung, die die eingangsseitige Versorgungsspannung in eine ausgangsseitige Gleichspannung umwandelt und an einem gemeinsamen Spannungsausgang 6 der Versorgungskomponente 13 bereitstellt. Die Rechnereinheit 14 des Computersystems 12 wird über den Spannungsausgang 6 mit einer Betriebsspannung versorgt. Insbesondere wird die Betriebsspannung über eine Stromversorgungsleitung 7 zwei Prozessoren 17A und 17B, einer Kommunikationsvorrichtung 18, einer Verwaltungskomponente 19 sowie einer primären Takterzeugungsschaltung 9 zugeführt. Die primäre Takterzeugungsschaltung 9 versorgt die Prozessoren 17A und 17B sowie die Verwaltungskomponente 19 mit einem externen Taktsignal.

Jeder der Prozessoren 17A und 17B umfasst einen Prozessorkern 34A beziehungsweise 34B sowie eine sekundäre Takterzeugungsvorrichtung 35A beziehungsweise 35B. Beispielsweise handelt es sich bei der sekundären Takterzeugwngsvorrichtung 35A beziehungsweise 35B um einen Taktverhältnisfestleger oder einen Taktvervielfacher, der aus dem externen Arbeitstakt der primären Takterzeugungsschaltung 9 einen internen Arbeitstakt für den Prozessorkern 34A beziehungsweise 34B erzeugt, der ein Vielfaches des externen Arbeitstaktes beträgt. Selbstverständlich sind auch andere Takterzeugungs- oder Umformungsschaltungen denkbar, die einen internen Arbeitstakt der Prozessorkerne 34A beziehungsweise 34B erzeugen beziehungsweise festlegen.

Die Verwaltungskomponente 19 ist über einen Datenbus 30 mit den Prozessoren 17A und 17B sowie der Kommunikationsvorrichtung 18 verbunden. Über die Verwaltungskomponente 19 können Betriebszustände der einzelnen Komponenten der Rechnereinheit 14 abgefragt und gegebenenfalls geändert werden. Beispielsweise handelt es sich bei der Verwaltungskomponente 19 um einen so genannten Service-Management-Baustein, auf dem ein von den Prozessoren 17A und 17B unabhängiges Steuerprogramm zur Überwachung der Rechnereinheit 14 abläuft. Alternativ kann anstelle eines gesonderten Überwachungsbausteins auch die Ausführung einer Verwaltungssoftware auf einem der Prozessoren 17A oder 18A vorgenommen werden. Mittels der Kommunikationsvorrichtung 18 ist eine Signalisierung von Betriebszuständen beziehungsweise eine Fernwartung des Computersystems 12 auch von dem Fernwartungssystem 16 aus über das Datennetzwerk 15 möglich.

Um einen sicheren Betrieb der Rechnereinheit 14 auch beim Ausfall einer der Stromversorgungseinheiten 1A bis 1C, beispielsweise wegen Ausfall einer der Mehrzahl der Phasenleitungen L₁ bis L₃, sicherzustellen, weist die Rechnereinheit 14 eine Spannungsüberwachungsschaltung 31 auf, die die über den Spannungsausgang 6 abgegebene Betriebsspannung des Computersystems 12 überwacht. Die Spannungsüberwachungsschaltung 31 umfasst im dargestellten Ausführungsbeispiel einen Spannungsteiler 32 umfassend einen ersten und einen zweiten Widerstand 32A beziehungsweise 32B, die zwischen die Stromversorgungsleitung 7 und ein bekanntes Referenzpotential, beispielsweise Erde, geschaltet sind. Der Mittelabgriff des Spannungsteilers 32 ist mit einem Komparator 33 verbunden, der die abgegriffene Spannung mit einer festen Referenzspannung V_{ref} vergleicht. Fällt die Spannung der Stromversorgungsleitung 7 unterhalb eines vorbestimmten Niveaus ab, beispielsweise weil eine der drei Stromversorgungseinheiten 1A bis 1C ausfällt, erzeugt der Komparator 33 an seinem Ausgang ein Steuersignal. Das Steuersignal des Komparators 33 wird sowohl dem ersten und dem zweiten Prozessor 17A beziehungsweise 17B als auch der Verwaltungskomponente 19 über eine Steuerleitung 11 zugeführt.

Wird durch die Spannungsüberwachungsschaltung 31 beim Ausfall der Stromversorgungseinheiten 1A ein Spannungsabfall an der Stromversorgungsleitung 7 erkannt und über die Steuerleitung 11 an die Prozessoren 17A und 17B signalisiert, reduzieren die Taktverhältnisfestleger 35A und 35B den Arbeitstakt der Prozessorkerne 34A und 34B. Auf diese Weise wird die Leistungsaufnahme der Prozessoren 17A und 17B reduziert, so dass die funktionsfähigen verbleibenden Stromversorgungseinheiten 1B und 1C das Computersystem 12 weiterhin mit einem ausreichenden Betriebsstrom versorgen können. Dabei laufen auf den Prozessorkernen 34A beziehungsweise 34B ausgeführte Prozesse weiter, wenn auch mit verminderter Geschwindigkeit, so dass es zu keiner erheblichen Störung des Computersystems 12 kommt.

Zudem erkennt die Verwaltungskomponente 19 dass eine der Stromversorgungseinheiten 1A bis 1C ausgefallen ist und signalisiert in einer vorteilhaften Ausgestaltung über die Kommunikationsvorrichtung 18 und das Datennetzwerk 15 diesen Fehlerzustand an das Fernwartungssystem 16.

Gemäß einer weiteren Ausgestaltung kann die Verwaltungskomponente 19 selbsttätig weitere Maßnahmen treffen, um den Stromverbrauch der Rechnereinheit 14 zu reduzieren. Beispielsweise können zum Betrieb der Rechnereinheit 14 nicht zwingend notwendige Komponenten abgeschaltet werden. In dem in der Figur 3 dargestellten Ausführungsbeispiel kann beispielsweise ein auf dem zweiten Prozessorkern 34B ausgeführter Prozess auf den Prozessorkern 34A des ersten Prozessors 17A übertragen werden und der zweite Prozessor 17B nachfolgend vollständig abgeschaltet werden. Wurde über diese oder vergleichbare Maßnahmen die Leistungsaufnahme der Rechnereinheit 14 soweit reduziert, dass eine sichere Stromversorgung mittels der verbleibenden Stromversorgungseinheiten 1B und 1C sichergestellt ist, kann das Steuersignal 11 zurückgenommen werden und der im Betrieb verbleibende erste Prozessorkern 34A durch die sekundäre Takterzeugungsschaltung 35A wiederum mit der vollen internen Arbeitsfrequenz beaufschlagt werden.

Um die volle Leistungsfähigkeit des Computersystems 12 wieder herzustellen kann ein mittels des Fernwartungssystems 16 herbeigerufener Servicetechniker die defekte Stromversorgungseinheit 1A ersetzen beziehungsweise eine Zuführung einer geeigneten Versorgungsspannung wieder herstellen. Nach Abschluss der Wartungsarbeiten kann daraufhin der zweite Prozessor 17B durch die Verwaltungskomponente 19 wieder aktiviert werden. Dies kann beispielsweise durch die automatische Erkennung eines Spannungsanstiegs an der Stromversorgungsleitung 7 durch die Spannungsüberwachungsschaltung 31 und entsprechenden Programmcode der Verwaltungskomponente 19 automatisch ausgeführt werden oder manuell durch den Servicetechniker, beispielsweise über das Fernwartungssystem 16, veranlasst werden.

Ein Vorteil der in der Figur 3 dargestellten Ausführungsform liegt darin, dass die als Hardwareschaltung ausgeführte Spannungsüberwachung 31 besonders schnell auf einen Ausfall einer der Stromversorgungseinheiten 1A bis 1C reagieren kann und mittels eines geeigneten Steuersignals, beispielsweise des PROCHOT-Signals an die Prozessoren 17A und 17B, eine beinahe sofortige Leistungsreduktion der Rechnereinheit 14 bewirken kann. Eine gesonderte Kommunikation oder Steuerleitung zwischen der Versorgungskomponente 13 und der Rechnereinheit 14 ist hierfür nicht erforderlich.

In Verbindung mit der nachgeschalteten und gegebenenfalls langsameren Überwachung und Konfiguration der Rechnereinheit 14 durch die Verwaltungskomponente 19 können weitere, komplexe Maßnahmen zum Betrieb des Computersystems bis zum Eintreffen eines Wartungstechnikers vorgenommen werden. Insbesondere kann die Spannungsüberwachungsschaltung 31 in der Nähe der Prozessoren 17A und 17B angeordnet und so dimensioniert sein, dass sie bereits anspricht, bevor die Eingangsspannungstoleranz der Prozessoren 17A und 17B unterschritten wurde. Somit kann in jedem Fall ein zuverlässiger Betrieb des Computersystems 12 sichergestellt werden.

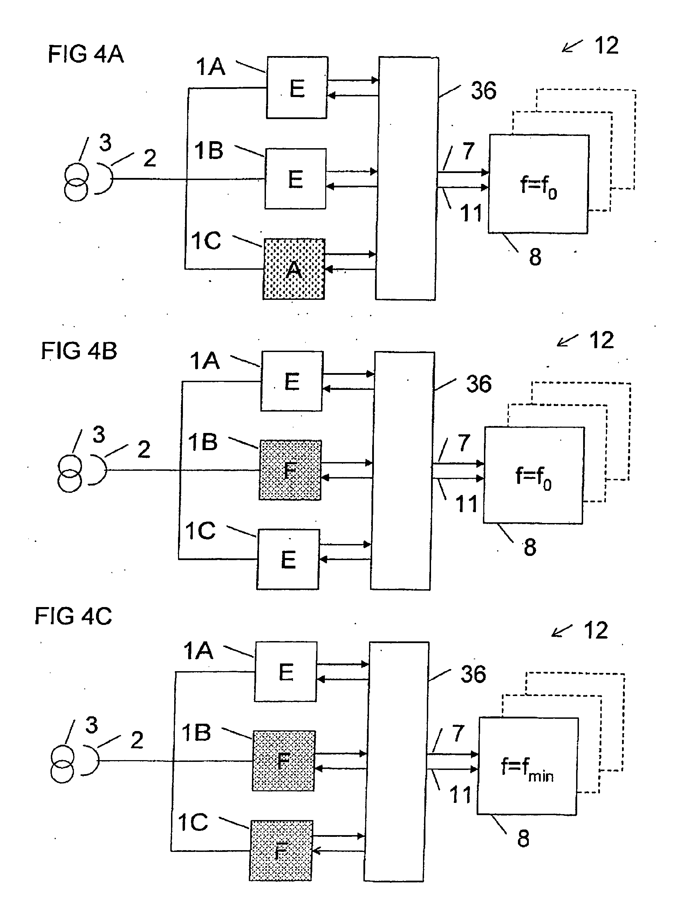

In den Figuren 4A bis 4C sind unterschiedliche Betriebszustände eines weiteren Computersystems 12 mit drei redundanten Stromversorgungseinheiten 1A bis 1C dargestellt. Die Stromversorgungseinheiten 1A bis 1C sind über einen gemeinsamen Spannungseingang 2 mit einer Versorgungsspannung 3, beispielsweise einer Netzwechselspannung, verbunden.

Ausgangsseitig sind die Stromversorgungseinheiten 1A bis 1C mit einer gemeinsamen Steuerschaltung 36 verbunden, die den Betrieb der Stromversorgungseinheit 1A bis 1C überwacht. Die Steuerschaltung 36 ist außerdem dazu eingerichtet, die einzelnen Stromversorgungseinheiten 1A bis 1C gezielt ein- beziehungsweise auszuschalten. Beispielsweise kann hierfür ein geeignetes Steuersignal von der Steuerschaltung 36 an jede einzelne der Stromversorgungseinheiten 1A bis 1C übertragen werden. Die Stromversorgungseinheiten 1A bis 1C können beispielsweise durch Unterbrechung eines Taktsignals zur Ansteuerung eines Schaltwandlers oder durch Trennung der Wandlerschaltung von dem Spannungseingang 2 durch ein elektronisches oder elektromechanisches Relais ausgeschaltet werden.

Die Steuerschaltung 36 ist des Weiteren über eine Stromversorgungsleitung 7 sowie eine Steuerleitung 11 mit einer oder mehreren Strom verbrauchenden Komponenten 8, beispielsweise einem Prozessor oder einem so genannten Server-Blade, verbunden, der in einer normalen und einer eingeschränkten Betriebsart betrieben werden kann.

Im dargestellten Ausführungsbeispiel weist jede der Stromversorgungseinheiten 1A bis 1C beispielsweise eine Ausgangsleistung von 50 W auf. Die Strom verbrauchende Komponente 8 nimmt in der normalen Betriebsart beispielsweise eine Leistung von 100 W auf. In der eingeschränkten Betriebsart nimmt die Strom verbrauchende Komponente 8 dagegen nur eine Leistung von 50 W auf.

Um einen besonders effizienten Betrieb des Computersystems 12 zu gewährleisten, aktiviert die Steuerschaltung 36 in der Regel nur zwei der drei zur Verfügung stehenden Stromversorgungseinheiten 1A bis 1C. Beispielsweise ist in der in Figur 4A dargestellten Situation die dritte Stromversorgungseinheit 1C deaktiviert, während die Stromversorgungseinheiten 1A und 1B aktiviert sind. Die Strom verbrauchende Komponente 8 wird in dieser Situation in einer normalen Betriebsart, das heißt mit voller Leistungsaufnahme, betrieben.

In der in Figur 4B dargestellten Situation wurde die zweite Stromversorgungseinheit 1B durch Auftreten eines Fehlers außer Betrieb gesetzt. Die Steuerschaltung 36 erkennt das Vorliegen eines Fehlers der zweiten Stromversorgungseinheit 1B und aktiviert automatisch die dritte Stromversorgungseinheit 1C, um den Ausfall der zweiten Stromversorgungseinheit 1B zu kompensieren. Die Strom verbrauchende Komponente 8 kann somit auch bei Ausfall einer der Stromversorgungseinheiten 1A bis 1C weiterhin in der ersten Betriebsart mit voller Leistung betrieben werden.

In der in Figur 4C dargestellten Situation ist zusätzlich zu der zweiten Stromversorgungseinheit 1B auch die dritte Stromversorgungseinheit 1C ausgefallen. Die Steuerschaltung 36 vermag in diesem Fall den Ausfall der weiteren Stromversorgungseinheit 1C nicht zu kompensieren. Um eine Überlastung der einzig verbleibenden Stromversorgungseinheit 1A zu vermeiden, stellt sie über die Steuerleitung 11 ein geeignetes Steuersignal an die Strom verbrauchende Komponente 8 zur Verfügung. Daraufhin wird die Strom verbrauchende Komponente 8, beispielsweise durch Reduzierung einer Arbeitsfrequenz f auf eine minimale Arbeitsfrequenz fₘᵢₙ, in eine eingeschränkte Betriebsart versetzt, in der die Leistungsaufnahme der Strom verbrauchenden Komponente auf 50 W abfällt. Somit kann ein fortwährender Betrieb des Computersystems 12 auch bei Ausfall von zwei der drei Stromversorgungseinheiten 1a bis 1c gewährleistet werden.

Das in den Figuren 4A bis 4C dargestellte Ausführungsbeispiel besitzt wie oben dargestellt eine hohe Ausfallsicherheit. Gleichzeitig können die drei Stromversorgungseinheiten 1A bis 1C in jeder der beschriebenen Situation in der Nähe ihrer maximalen Ausgangsleistung und damit mit größtmöglicher Effizienz betrieben werden. Es ist auch nicht erforderlich, jede der Stromversorgungseinheiten 1A bis 1C derart zu dimensionieren, dass sie allein den Betrieb der Strom verbrauchenden Komponente 8 in der normalen Betriebsart bereitstellen kann.

Das mit Bezug auf die Figuren 4A bis 4C beschriebene System sowie die in dieser Anmeldung allgemein beschriebene Steuer- und Überwachungsvorrichtung eignen sich besonders zum Betrieb modular aufgebauter Serverrechner. Beispielsweise verfügen so genannte Blade Server über eine Mehrzahl von weitgehend voneinander unabhängigen Server-Blades mit ein oder mehreren darauf angeordneten Prozessoren zum Bearbeiten von Aufgaben des Computersystems. Ebenso umfassen Blade Server in der Regel eine Mehrzahl von voneinander weitgehend unabhängig betreibbaren Stromversorgungseinheiten, die die Betriebsspannung für die Server-Blades und weitere Einbaukomponenten bereitstellen. Durch erfindungsgemäße Abschaltung einzelner Prozessoren oder Server-Blades oder Umkonfiguration des Blade Servers als ganzem, beispielsweise durch Neuverteilung der Aufgaben auf andere, insbesondere wenigere Server-Blades, kann die Leistungsaufnahme des Blade Servers an die zur Verfügung stehenden Netzteile angepasst werden, ohne dessen Betriebssicherheit in Frage zu stellen.

Es wird darauf hingewiesen, dass es sich bei den dargestellten Ausgestaltungen um beispielhafte Anordnungen handelt, deren Merkmale in beinahe beliebiger Weise miteinander kombiniert werden können. Selbstverständlich können auch Anordnungen mit mehr als zwei beziehungsweise drei Stromversorgungseinheiten und Strom verbrauchenden Komponenten in der beschriebenen Art und Weise überwacht beziehungsweise angesteuert werden.

### Bezugszeichenliste

- 1: Stromversorgungseinheit
- 2: Spannungseingang
- 3: Versorgungsspannung
- 4: Wandlerschaltung
- 5: Überwachungsschaltung
- 6: Spannungsausgang
- 7: Stromversorgungsleitung
- 8: Strom verbrauchende Komponente
- 9: (primäre) Takterzeugungsschaltung
- 10: Unterbrecher
- 11: Steuerleitung
- 12: Computersystem
- 13: Versorgungskomponente
- 14: Rechnereinheit
- 15: Datennetzwerk
- 16: Fernwartungssystem
- 17: Prozessor
- 18: Kommunikationsvorrichtung
- 19: Verwaltungskomponente
- 30: Datenbus
- 31: Spannungsüberwachungsschaltung
- 32: Spannungsteiler
- 33: Komparator
- 34: Prozessorkern
- 35: (sekundäre) Takterzeugungsschaltung
- 36: Steuerschaltung

## Patentansprüche

1. Anordnung, umfassend
- eine Mehrzahl von Stromversorgungseinheiten (1A, 1B, 1c) zum Erzeugen einer ausgangsseitigen Betriebsspannung aus wenigstens einer eingangsseitigen Versorgungsspannung (3),
- wenigstens eine Strom verbrauchende Komponente (8), die in wenigstens einer normalen Betriebsart mit einer ersten Leistungsaufnahme und einer eingeschränkten Betriebsart mit wenigstens einer zweiten, geringeren als der ersten Leistungsaufnahme betreibbar ist, wobei die Strom verbrauchende Komponente (8) elektrisch mit der Mehrzahl von Stromversorgungseinheiten (1A, 1B, 1C) gekoppelt ist und die erste Leistungsaufnahme der Strom verbrauchende Komponente (8) in der normalen Betriebsart geringer ist als die kombinierte Ausgangsleistung der Mehrzahl von Stromversorgungseinheiten (1A, 1B, 1c), so dass eine erste Untergruppe von Stromversorgungseinheiten (1A, 1B) zur Bereitstellung der in der normalen Betriebsart erforderlichen Leistung ausreicht, und eine zweite, kleinere Untergruppe (1A) von Stromversorgungseinheiten, insbesondere eine einzelne Stromversorgungseinheit (1A), zur Bereitstellung der in der eingeschränkten Betriebsart erforderlichen Leistung ausreicht, **gekennzeichnet durch**
- mit der Mehrzahl von Stromversorgungseinheiten (1) und der Strom verbrauchenden Komponente (8) gekoppelte Steuermittel, die dazu eingerichtet sind, die Funktion der Mehrzahl von Stromversorgungseinheiten (1A, 1B, 1C) zu überwachen und wenigstens eine Stromversorgungseinheit (1C) zu deaktivieren, wenn diese Stromversorgungseinheit (1C) zur Bereitstellung der in der normalen Betriebsart erforderlichen Leistung nicht benötigt wird, wobei die Steuermittel des Weiteren dazu eingerichtet sind, beim Ausfall wenigstens einer Stromversorgungseinheit (1B) der ersten Untergruppe die Strom verbrauchende Komponente (8) aus der normalen Betriebsart in die eingeschränkte Betriebsart zu schalten, wenn die kombinierte Ausgangsleistung der verbleibenden Stromversorgungseinheiten (1A) geringer ist als die erste Leistungsaufnahme in der normalen Betriebsart der Strom verbrauchenden Komponente (8), so dass die Stromaufnahme der Strom verbrauchenden Komponente (8) zumindest vorübergehend reduziert wird.

2. Anordnung nach Anspruch 1, **dadurch gekennzeichnet, dass**
die Steuermittel des Weiteren dazu eingerichtet sind, beim Ausfall wenigstens einer aktiven Stromversorgungseinheit (1B) die wenigstens eine deaktivierte Stromversorgungseinheit (1C) zu aktivieren, um die Strom verbrauchende Komponente (8) in der normalen Betriebsart mit der erforderlichen Leistung zu versorgen.

3. Anordnung nach Anspruch 1 oder 2, **dadurch gekennzeichnet, dass**
die Steuermittel wenigstens eine Überwachungsvorrichtung zur Erzeugung eines vorbestimmten Steuersignals bei Ausfall wenigstens einer Stromversorgungseinheit (1C) und eine mit der Überwachungsvorrichtung gekoppelte Drosselvorrichtung zur Drosselung der Strom verbrauchenden Komponente (8) beim Empfang des vorbestimmten Steuersignals umfasst.

4. Anordnung nach Anspruch 3, **dadurch gekennzeichnet, dass**
die Strom verbrauchende Komponente (8) einen Prozessorkern (34) umfasst und die Drosselvorrichtung einer Takterzeugungsschaltung (9, 35) zur Versorgung des Prozessorkerns (34) mit einem Arbeitstakt umfasst, wobei der Prozessorkern (34) in der normalen Betriebsart von der Takterzeugungsschaltung (9, 35) mit einem ersten Arbeitstakt und in der eingeschränkten Betriebsart mit einem zweiten, niedrigeren Arbeitstakt versorgt wird.

5. Anordnung nach Anspruch 4, **dadurch gekennzeichnet, dass**
der Prozessorkern (34) und die Takterzeugungsschaltung (35) in einem Prozessor (17) angeordnet sind, wobei der Prozessor wenigstens einen Anschlusspin (PROCHOT) zum Anlegen des vorbestimmten Steuersignals aufweist.

6. Anordnung nach einem der Ansprüche 3 bis 5,
**dadurch gekennzeichnet, dass**
jede der wenigstens zwei Stromversorgungseinheiten (1A, 1B, 1C) eine Überwachungsvorrichtung (5) zur Überwachung einer zulässigen Ausgangsleistung oder eines zulässigen Ausgangsstroms umfasst, die dazu eingerichtet ist, beim Erkennen eines Überschreitens der zulässigen Ausgangsleistung beziehungsweise des zulässigen Ausgangsstroms das vorbestimmte Steuersignal zu erzeugen.

7. Anordnung nach einem der Ansprüche 3 bis 6,
**dadurch gekennzeichnet, dass**
die wenigstens eine Überwachungsvorrichtung eine Spannungsüberwachungsschaltung (31) aufweist, die dazu eingerichtet ist, die ausgangsseitige Betriebsspannung mit einem vorbestimmten Schwellwert zu vergleichen und beim Unterschreiten des vorbestimmten Schwellwerts das vorbestimmte Steuersignal zu erzeugen.

8. Computersystem (12), umfassend
- wenigstens eine Anordnung nach einem der Ansprüche 1 bis 7 und
- wenigstens eine Verwaltungskomponente (19), die mit den Steuermitteln gekoppelt und dazu eingerichtet ist, beim Ausfall wenigstens einer Stromversorgungskomponente (1B, 1C) einen Fehlerzustand zu signalisieren.

9. Computersystem (12) nach Anspruch 8,
**dadurch gekennzeichnet, dass**
die Verwaltungskomponente (19) über eine Kommunikationsvorrichtung (18) mit einem Fernwartungssystem (16) koppelbar und dazu eingerichtet ist, den Fehlerzustand an das Fernwartungssystem (16) zu signalisieren.

10. Computersystem (12) nach Anspruch 8 oder 9,
**dadurch gekennzeichnet, dass**
die Verwaltungskomponente (19) dazu eingerichtet ist, bei Signalisierung des Fehlerzustands eine Konfiguration des Computersystems (12) zu ändern, um eine Leistungsaufnahme des Computersystems (12) zu reduzieren.

11. Computersystem (12) nach Anspruch 10,
**dadurch gekennzeichnet, dass**
die Verwaltungskomponente (19) dazu eingerichtet ist, die Steuermittel nach Änderung der Konfiguration zurückzusetzen, um die Strom verbrauchende Komponente (8) zurück aus der eingeschränkten in die normale Betriebsart zu schalten.

12. Verfahren (20) zur Steuerung einer Anordnung mit einer Strom verbrauchenden Komponente (8) und einer Mehrzahl von Stromversorgungseinheiten (1A, 1B, 1C) zum Bereitstellen einer Betriebsspannung für die Strom verbrauchende Komponente (8), wobei eine erste Leistungsaufnahme der Strom verbrauchende Komponente (8) in einer normalen Betriebsart geringer ist als die kombinierte Ausgangsleistung der Mehrzahl von Stromversorgungseinheiten (1A, 1B, 1c), so dass eine erste Untergruppe von Stromversorgungseinheiten (1A, 1B) zur Bereitstellung der in der normalen Betriebsart erforderlichen Leistung ausreicht, und eine zweite, kleinere Untergruppe (1A) von Stromversorgungseinheiten, insbesondere eine einzelne Stromversorgungseinheit (1A), zur Bereitstellung der in der eingeschränkten Betriebsart erforderlichen Leistung ausreicht, mit den Schritten:
- Deaktivieren wenigstens einer Stromversorgungseinheit (1C), wenn diese Stromversorgungseinheit (1C) zur Bereitstellung der in der normalen Betriebsart erforderlichen Leistung nicht benötigt wird,
- Überwachen der Mehrzahl von Stromversorgungseinheiten (1A, 1B, 1C) auf Ausfall durch wenigstens eine Überwachungsvorrichtung,
- Erzeugen eines vorbestimmten Steuersignals durch die wenigstens eine Überwachungsvorrichtung, wenn der Ausfall wenigstens einer aktiven Stromversorgungseinheit (1B) erkannt wurde, und
- Schalten der Strom verbrauchenden Komponente (8) von der normalen Betriebsart mit der ersten Leistungsaufnahme in eine eingeschränkte Betriebsart mit einer zweiten, geringeren Leistungsaufnahme, wenn das vorbestimmte Steuersignal erkannt wurde und die kombinierte Ausgangsleistung der verbleibenden Stromversorgungseinheiten (1A) geringer ist als die erste Leistungsaufnahme in der normalen Betriebsart der Strom verbrauchenden Komponente (8), so dass die Stromaufnahme der Strom verbrauchenden Komponente (8) zumindest vorübergehend reduziert wird.

13. Verfahren (20) nach Anspruch 12 mit dem zusätzlichen Schritt:
- Ändern einer Konfiguration eines die Anordnung umfassendes Computersystems (12), wenn das vorbestimmte Steuersignal erkannt wurde.

14. Verfahren (20) nach Anspruch 13 mit dem zusätzlichen Schritt:
- Schalten der Strom verbrauchenden Komponente (8) zurück aus der eingeschränkten in die normale Betriebsart, nachdem die Konfigurationsänderung durchgeführt wurde.

15. Verfahren (20) nach einem der Ansprüche 12 bis 14 mit dem zusätzlichen Schritt:
- Schalten der Strom verbrauchenden Komponente (8) zurück aus der eingeschränkten in die normale Betriebsart, wenn durch die wenigstens eine Überwachungskomponente erkannt wurde, dass die wenigstens eine zuvor ausgefallene Stromversorgungseinheit (1B) wieder funktionsbereit ist.

16. Verfahren (20) nach einem der Ansprüche 12 bis 14 mit den zusätzlichen Schritten:
- Aktivieren der wenigstens einen deaktivierten Stromversorgungseinheit (1C) beim Ausfall wenigstens einer aktiven Stromversorgungseinheit (1B), um die Strom verbrauchende Komponente (8) mit der erforderlichen Leistung für die normalen Betriebsart zu versorgen, und
- Schalten der verbrauchenden Komponente (8) zurück aus der eingeschränkten in die normale Betriebsart.

## Claims

1. Assembly comprising
- a plurality of power supply units (1A, 1B, 1C) for producing an output-side operating voltage from at least one input-side supply voltage (3),
- at least one power-consuming component (8) which can be operated in at least one normal operating mode with a first power consumption and can be operated in a restricted operating mode with at least one second power consumption which is lower than the first power consumption, the power-consuming component (8) being electrically coupled to the plurality of power supply units (1A, 1B, 1C), and the first power consumption of the power-consuming component (8) in the normal operating mode being lower than the combined output power of the plurality of power supply units (1A, 1B, 1C), with the result that a first subgroup of power supply units (1A, 1B) suffices to provide the power required in the normal operating mode, and a second, smaller subgroup (1A) of power supply units, in particular an individual power supply unit (1A), suffices to provide the power required in the restricted operating mode, **characterized by**
- control means which are coupled to the plurality of power supply units (1) and to the power-consuming component (8) and are set up to monitor the function of the plurality of power supply units (1A, 1B, 1C) and to deactivate at least one power supply unit (1C) if this power supply unit (1C) is not needed to provide the power required in the normal operating mode, the control means also being set up to switch the power-consuming component (8) from the normal operating mode into the restricted operating mode when at least one power supply unit (1B) in the first subgroup fails if the combined output power of the remaining power supply units (1A) is lower than the first power consumption in the normal operating mode of the power-consuming component (8), with the result that the power consumption of the power-consuming component (8) is at least temporarily reduced.

2. Assembly according to Claim 1, **characterized in that**
the control means are also set up to activate the at least one deactivated power supply unit (1C) when at least one active power supply unit (1B) fails in order to supply the power-consuming component (8) with the required power in the normal operating mode.

3. Assembly according to Claim 1 or 2, **characterized in that**
the control means comprise at least one monitoring apparatus for generating a predetermined control signal when at least one power supply unit (1C) fails and a throttle apparatus which is coupled to the monitoring apparatus and is intended to throttle the power-consuming component (8) when the predetermined control signal is received.

4. Assembly according to Claim 3, **characterized in that**
the power-consuming component (8) comprises a processor core (34) and the throttle apparatus comprises a clock generation circuit (9, 35) for supplying the processor core (34) with an operating clock, the processor core (34) being supplied with a first operating clock in the normal operating mode by the clock generation circuit (9, 35) and being supplied with a second, lower operating clock in the restricted operating mode.

5. Assembly according to Claim 4, **characterized in that** the processor core (34) and the clock generation circuit (35) are arranged in a processor (17), the processor having at least one connection pin (PROCHOT) for applying the predetermined control signal.

6. Assembly according to one of Claims 3 to 5,
**characterized in that**
each of the at least two power supply units (1A, 1B, 1C) comprises a monitoring apparatus (5) which is intended to monitor a permissible output power or a permissible output current and is set up to generate the predetermined control signal upon detecting that the permissible output power or the permissible output current has been exceeded.

7. Assembly according to one of Claims 3 to 6,
**characterized in that**
the at least one monitoring apparatus has a voltage monitoring circuit (31) which is set up to compare the output-side operating voltage with a predetermined threshold value and to generate the predetermined control signal when the predetermined threshold value is undershot.

8. Computer system (12) comprising
- at least one assembly according to one of Claims 1 to 7 and
- at least one management component (19) which is coupled to the control means and is set up to signal a fault state when at least one power supply component (1B, 1C) fails.

9. Computer system (12) according to Claim 8,
**characterized in that**
the management component (19) can be coupled to a remote maintenance system (16) via a communication apparatus (18) and is set up to signal the fault state to the remote maintenance system (16).

10. Computer system (12) according to Claim 8 or 9,
**characterized in that**
the management component (19) is set up to change a configuration of the computer system (12) upon signaling the fault state in order to reduce a power consumption of the computer system (12).

11. Computer system (12) according to Claim 10,
**characterized in that**
the management component (19) is set up to reset the control means after changing the configuration in order to switch the power-consuming component (8) back from the restricted operating mode into the normal operating mode.

12. Method (20) for controlling an assembly having a power-consuming component (8) and a plurality of power supply units (1A, 1B, 1C) for providing an operating voltage for the power-consuming component (8), a first power consumption of the power-consuming component (8) in a normal operating mode being lower than the combined output power of the plurality of power supply units (1A, 1B, 1C), with the result that a first subgroup of power supply units (1A, 1B) suffices to provide the power required in the normal operating mode, and a second, smaller subgroup (1A) of power supply units, in particular an individual power supply unit (1A), suffices to provide the power required in the restricted operating mode, said method having the following steps:
- at least one power supply unit (1C) is deactivated if this power supply unit (1C) is not needed to provide the power required in the normal operating mode,
- the plurality of power supply units (1A, 1B, 1C) are monitored for failure by at least one monitoring apparatus,
- the at least one monitoring apparatus generates a predetermined control signal if the failure of at least one active power supply unit (1B) has been detected, and
- the power-consuming component (8) is switched from the normal operating mode with the first power consumption into a restricted operating mode with a second, lower power consumption if the predetermined control signal has been detected and the combined output power of the remaining power supply units (1A) is lower than the first power consumption in the normal operating mode of the power-consuming component (8), with the result that the power consumption of the power-consuming component (8) is at least temporarily reduced.

13. Method (20) according to Claim 12 with the following additional step:
- a configuration of a computer system (12) comprising the assembly is changed if the predetermined control signal has been detected.

14. Method (20) according to Claim 13 with the following additional step:
- the power-consuming component (8) is switched back from the restricted operating mode into the normal operating mode after the configuration has been changed.

15. Method (20) according to one of Claims 12 to 14 with the following additional step:
- the power-consuming component (8) is switched back from the restricted operating mode into the normal operating mode if the at least one monitoring component has detected that the at least one previously failed power supply unit (1B) is ready for operation again.

16. Method (20) according to one of Claims 12 to 14 with the following additional steps:
- the at least one deactivated power supply unit (1C) is activated when at least one active power supply unit (1B) fails in order to supply the power-consuming component (8) with the required power for the normal operating mode, and
- the consuming component (8) is switched back from the restricted operating mode into the normal operating mode.

## Revendications

1. Dispositif, comprenant :
- une pluralité d'unités d'alimentation en courant (1A, 1B, 1C) destinées à générer une tension de fonctionnement de sortie à partir d'au moins une tension d'alimentation d'entrée (3),
- au moins un composant consommateur de courant (8) qui peut être mis en fonctionnement dans au moins un mode de fonctionnement normal avec une première consommation de puissance et un mode de fonctionnement limité avec au moins une seconde consommation de puissance inférieure à la première consommation de puissance, dans lequel le composant consommateur de courant (8) est électriquement couplé à la pluralité d'unités d'alimentation en courant (1A, 1B, 1C) et la première consommation de puissance du composant consommateur de courant (8) dans le mode de fonctionnement normal est inférieure à la puissance de sortie combinée de la pluralité d'unités d'alimentation en courant (1A, 1B, 1C), de telle manière qu'un premier sous-groupe d'unités d'alimentation en courant (1A, 1B) suffise à fournir la puissance nécessaire dans le mode de fonctionnement normal, et qu'un second sous-groupe (1A) d'unités d'alimentation en courant plus petit, en particulier une unité d'alimentation en courant unique (1A), suffise à la fourniture de la puissance nécessaire dans le mode de fonctionnement limité, **caractérisé par**
- des moyens de commande reliés à la pluralité d'unités d'alimentation en courant (1) et à un composant consommateur de courant (8), qui sont conçus pour surveiller le fonctionnement de la pluralité d'unités d'alimentation en courant (1A, 1B, 1C) et pour désactiver au moins une unité d'alimentation en courant (1C) lorsque ladite unité d'alimentation en courant (1C) ne suffit pas à fournir la puissance nécessaire dans le mode de fonctionnement normal, dans lequel les moyens de commande sont en outre conçus, en cas de défaillance d'au moins une unité d'alimentation en courant (1B) du premier sous-groupe, pour faire passer le composant consommateur de courant (8) du mode de fonctionnement normal au mode de fonctionnement limité lorsque la puissance de sortie combinée des unités d'alimentation en courant restantes (1A) est inférieure à la première consommation de puissance dans le mode de fonctionnement normal du composant consommateur de courant (8), de manière à ce que la consommation de courant du composant consommateur de courant (8) soit réduite au moins temporairement.

2. Dispositif selon la revendication 1, **caractérisé en ce que** les moyens de commande sont en outre conçus, lors d'une défaillance d'au moins une unité d'alimentation en courant active (1B), pour activer au moins une unité d'alimentation en courant désactivée (1C) afin d'alimenter en courant le composant consommateur de courant (8) dans le mode de fonctionnement normal avec la puissance nécessaire.

3. Dispositif selon la revendication 1 ou 2, **caractérisé en ce que** les moyens de commande comprennent au moins un dispositif de surveillance destiné à générer un signal de commande prédéterminé en cas de défaillance d'au moins une unité d'alimentation en courant (1C) et un dispositif de limitation couplé au dispositif de surveillance pour limiter la consommation du composant consommateur de courant (8) lors de la réception du signal de commande prédéterminé.

4. Dispositif selon la revendication 3, **caractérisé en ce que** le composant consommateur de courant (8) comprend un coeur de processeur (34) et le dispositif de limitation comprend un circuit générateur d'horloge (9, 35) destiné à alimenter le coeur de processeur (34) avec une horloge de travail, dans lequel le coeur de processeur (34), dans le mode de fonctionnement normal, est alimenté par le circuit générateur d'horloge (9, 35) avec une première horloge de travail et, dans le mode de fonctionnement limité, avec une seconde horloge de travail inférieure.

5. Dispositif selon la revendication 4, **caractérisé en ce que** le coeur de processeur (34) et le circuit générateur d'horloge (35) sont disposés dans un processeur (17), le processeur comprenant au moins une broche de raccordement (PROCHOT) destinée à appliquer le signal de commande prédéterminé.

6. Dispositif selon l'une quelconque des revendications 3 à 5, **caractérisé en ce que** chacune des au moins deux unités d'alimentation en courant (1A, 1B, 1C) comprend un dispositif de surveillance (5) destiné à surveiller une puissance de sortie admissible ou un courant de sortie admissible, qui est conçu, lors de la détection d'un dépassement de la puissance de sortie admissible ou du courant de sortie admissible, pour générer le signal de commande prédéterminé.

7. Dispositif selon l'une quelconque des revendications 3 à 6, **caractérisé en ce qu'**au moins un dispositif de surveillance comprend un circuit de surveillance de tension (31) qui est conçu pour comparer la tension de fonctionnement de sortie à une valeur de seuil prédéterminée et, lors d'un abaissement en dessous de la valeur de seuil prédéterminée, pour générer le signal de commande prédéterminé.

8. Système d'ordinateur (12), comprenant :
- au moins un dispositif selon l'une quelconque des revendications 1 à 7, et
- au moins un composant de gestion (19) qui est couplé aux moyens de commande et est conçu pour signaler, en cas de défaillance d'au moins un composant d'alimentation en courant (1B, 1C), un état d'erreur.

9. Système d'ordinateur (12) selon la revendication 8, **caractérisé en ce que**
le composant de gestion (19) peut être relié par l'intermédiaire d'un dispositif de communication (18) à un système de télémaintenance (16) et est conçu pour signaler l'état d'erreur au système de télémaintenance (16).

10. Système d'ordinateur (12) selon la revendication 8 ou 9, **caractérisé en ce que**
le composant de gestion (19) est conçu, lors de la signalisation de l'état d'erreur, pour modifier une configuration du système d'ordinateur (12) afin de réduire la consommation de puissance du système d'ordinateur (12).

11. Système d'ordinateur (12) selon la revendication 10, **caractérisé en ce que**
le composant de gestion (19) est conçu pour réinitialiser les moyens de commande après une modification de la configuration, afin de ramener le composant consommateur de courant (8) du mode de fonctionnement limité au mode de fonctionnement normal.

12. Procédé (20) destiné à commander un dispositif comportant un composant consommateur de courant (8) et une pluralité d'unités d'alimentation en courant (1A, 1B, 1C) destinées à fournir une tension de fonctionnement au composant consommateur de courant (8), dans lequel une première consommation de courant du composant consommateur de courant (8) dans un état de fonctionnement normal est inférieure à la puissance de sortie combinée de la pluralité d'unités d'alimentation en courant (1A, 1B, 1C), de manière à ce qu'un premier sous-groupe d'unités d'alimentation en courant (1A, 1B) suffise à fournir la puissance nécessaire dans le mode de fonctionnement normal, et qu'un second sous-groupe (1A) d'unités d'alimentation en courant plus petit, en particulier une unité d'alimentation en courant unique (1A), suffise à fournir la puissance nécessaire dans le mode de fonctionnement limité, comprenant des étapes consistant à :
- désactiver au moins une unité d'alimentation en courant (1C) lorsque ladite unité d'alimentation en courant (1C) doit être utilisée pour fournir la puissance nécessaire dans le mode de fonctionnement normal,
- surveiller la pluralité d'unités d'alimentation en courant (1A, 1B, 1C) pour détecter une défaillance au moyen d'au moins un dispositif de surveillance,
- générer un signal de commande prédéterminé au moyen d'au moins un dispositif de surveillance lorsque la défaillance d'au moins une unité d'alimentation en courant active (1B) a été détectée, et
- faire passer le composant consommateur de courant (8) du mode de fonctionnement normal avec la première consommation de puissance à un mode de fonctionnement limité avec une seconde consommation de puissance plus faible lorsque le signal de commande prédéterminé a été détecté et lorsque la puissance de sortie combinée des unités d'alimentation en courant restantes (1A) est inférieure à la première consommation de puissance dans le mode de fonctionnement normal du composant consommateur de courant (8), de manière à ce que la consommation de courant du composant consommateur de courant (8) soit réduite au moins temporairement.

13. Procédé (20) selon la revendication 12, comprenant l'étape supplémentaire consistant à :
- modifier une configuration d'un système d'ordinateur (12) comprenant le dispositif lorsque le signal de commande prédéterminé a été détecté.

14. Procédé (20) selon la revendication 13, comprenant l'étape supplémentaire consistant à :
- ramener le composant consommateur de courant (8) de l'état de fonctionnement limité à l'état de fonctionnement normal après que la modification de configuration a été effectuée.

15. Procédé (20) selon l'une quelconque des revendications 12 à 14, comprenant l'étape supplémentaire consistant à :
- ramener le composant consommateur de courant (8) de l'état de fonctionnement limité à l'état de fonctionnement normal lorsqu'il a été détecté au moyen d'au moins l'un des composants de surveillance que l'au moins une unité d'alimentation en courant auparavant défaillante (1B) est de nouveau prête à fonctionner.

16. Procédé (20) selon l'une quelconque des revendications 12 à 14 comprenant les étapes supplémentaires consistant à :
- activer au moins une unité d'alimentation en courant désactivée (1C) en cas de défaillance d'au moins une unité d'alimentation en courant active (1B) afin d'alimenter le composant consommateur de courant (8) avec la puissance nécessaire pour le mode de fonctionnement normal, et
- ramener le composant consommateur (8) de l'état de fonctionnement limité à l'état de fonctionnement normal.
